# EUROPÄISCHE PATENTSCHRIFT

(11) **EP 0 961 806 B1**
(45) Veröffentlichungstag und Bekanntmachung des Hinweises auf die Patenterteilung: **10.04.2002**
(21) Anmeldenummer: 98908023.9
(22) Anmeldetag: 30.01.1998
(51) Int. Cl.: C08J 7/00, C08J 7/12

(54) **VERFAHREN ZUR MODIFIZIERUNG VON SUBSTRATOBERFLÄCHEN AUS POLYMEREN ODER COPOLYMEREN MIT METHACRYLATANTEIL**
HOW TO MODIFY SUBSTRATE POLYMER OR COPOLYMER SURFACES CONTAINING METHACRYLATE
COMMENT MODIFIER DES SURFACES DE SUBSTRAT POLYMERIQUES OU COPOLYMERIQUES CONTENANT DU METHACRYLATE

(30) Priorität: 31.01.1997 DE 19703538
(43) Veröffentlichungstag der Anmeldung: 08.12.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHULZ, Ulrike, D-07743 Jena (DE); KAISER, Norbert, D-07745 Jena (DE); STÖCKL, Wieland, D-07749 Jena (DE)
(74) Vertreter: Pfenning, Meinig & Partner GbR
(86) Internationale Anmeldenummer: EP9800499
(87) Internationale Veröffentlichungsnummer: WO9833847

(56) Entgegenhaltungen:
- US-A- 4 409 258
- US-A- 5 169 675
- US-A- 5 569 497
- DATABASE WPI Week 8149 Derwent Publications Ltd., London, GB; AN 81-90197D XP002069192 & JP 56 137 354 A (CHO LSI GIJUTSU KENKYU KUMIAI) , 27.Oktober 1981

## Beschreibung

Die Erfindung betrifft ein Verfahren zur Modifizierung von Oberflächen von Substraten aus Polymeren oder Copolymeren, die Methacrylat enthalten, die nachfolgend mit mindestens einer weiteren, die Substratoberfläche schützenden Schicht versehen werden sollen. Der ausgebildete Schichtaufbau soll die Eigenschaften des Substrates aus z.B. Polymethylmethacrylat für die jeweilige Anwendung verbessern. So kann beispielsweise eine entspiegelnde Schicht oder ein solches Schichtsystem für optische Anwendungen aufgebracht werden. Das ausgebildete Schichtsystem kann weiter den mechanischen Schutz verbessern und das Eindringen von Feuchtigkeit zumindest stark behindern.

Bei der Aufbringung von entsprechenden Funktionsschichten auf Polymethylmethacrylat oder Methacrylat enthaltende Polymere oder Copolymere treten unter Verwendung der bisher üblicherweise verwendeten Verfahren, insbesondere Probleme bei der Haftung dieser Funktionsschichten auf dem Substratmaterial auf.

Die bisher erreichbare Schichtqualität, erfüllt dabei besonders in Hinblick auf die Klimastabilität der beschichteten Substrate nicht die Anforderungen industrieller Anwender und es kann bei höheren Temperaturen und/oder einer entsprechend hohen Luftfeuchtigkeit zu Ablösungen kommen.

Bisher verwendete Verfahren zur Verbesserung der Haftung solcher Funktionsschichten auf Polymethylmethacrylat sind beispielsweise lonenbehandlungen (DE 32 42 649 C1, DE 36 24 467 A1), Plasmabehandlungen (US 5,346,728, US 4,091,166, US 4,649,071), elektrische Koronaentladungen (DE 41 07 945), UV-Bestrahlung, chemische Reaktionen mit der Polymermatrix unter Ausbildung von Copolymeren sowie eine Aktivierung durch Behandlung mit Siliziumtetrachlorid (DE 40 09 624 A1).

Des weiteren ist in JP, A, 56 137 354 ein Verfahren zur Ausbildung einer bestimmten Struktur auf einer mit einem Resist beschichteten Maske beschrieben. Als ein Resist ist dort PMMA genannt, das mittels eines mit einem Elektronenstrahl erzeugten Plasma unter Zufuhr von Wasserdampf enthaltender Luft verbrannt werden soll und nach dieser Behandlung der Maske mit dem aufgebrachten Resist ein Ätzen im Vakuum unter Zufuhr einer Ätzlösung erfolgen soll.

Aufgabe der Erfindung ist es daher, Oberflächen von Substraten, die Methacrylat enthalten, so zu modifizieren, daß ein nachfolgend aufzubringender Funktionsschichtaufbau eine verbesserte Haftung auf dem Substrat aufweist und das Verfahren einfach durchführbar ist.

Erfindungsgemäß wird diese Aufgabe mit den Merkmalen des Patentanspruchs 1 gelöst. Vorteilhafte Ausgestaltungsformen und Weiterbildungen der Erfindung ergeben sich bei Verwendung der in den untergeordneten Ansprüchen genannten Merkmale.

Das zu beschichtende zumindest Methacrylat enthaltende Substrat wird in einer herkömmlichen Vakuum-Beschichtungsanlage, die mit einer zusätzlichen Elektrode ausgerüstet ist, an ihrer Oberfläche modifiziert. Bei der Modifizierung wird ein reaktives Gas, das Sauerstoff und Wasser enthält zugegeben, wobei die Modifizierung bei einem Druck zwischen 10⁻¹ mbar bis 10⁻² mbar, bevorzugt zwischen 10⁻² und 5 * 10⁻² mbar durchgeführt wird. Als reaktives Gas kann beispielsweise Luft verwendet werden, deren relative Feuchtigkeit mindestens 30 % und maximal 70 %, vor der Eintretung des Gases in den Rezipienten, beträgt. Bevorzugt ist eine relative Feuchtigkeit von mindestens 40 %. Bei Verwendung eines anderen Gases außer Luft soll ein äquivalenter Wasseranteil eingehalten werden.

Nach Anlegen einer Hochspannung von mindestens 1 kV zwischen der zusätzlichen Elektrode, dem Rezipienten oder Substrathalter kommt es zu selbständigen Gasentladungen unter Ausbildung eines Plasmas. Dadurch wird zu Beginn der Modifizierung Substratmaterial an der Oberfläche abgetragen und parallel dazu eine chemische Reaktion eingeleitet, bei der die Oberfläche des Substrates unter Ausbildung einer Polymerschicht verändert wird. Die an der Oberfläche des Substrates ausgebildete Polymerschicht unterscheidet sich in ihrer chemischen Zusammensetzung und demzufolge auch mit ihren Eigenschaften deutlich vom Substratmaterial. Die Umwandlung der Oberflächenschicht erfolgt dabei in einem Zeitraum von ca. 180 bis 300 s nach dem Beginn der Einwirkung des Plasmas. Das Verfahren sollte jedoch so durchgeführt werden, bis eine Modifizierung mit einer Mindestdicke von 20 nm in der Oberflächenschicht des Substrates erreicht ist.

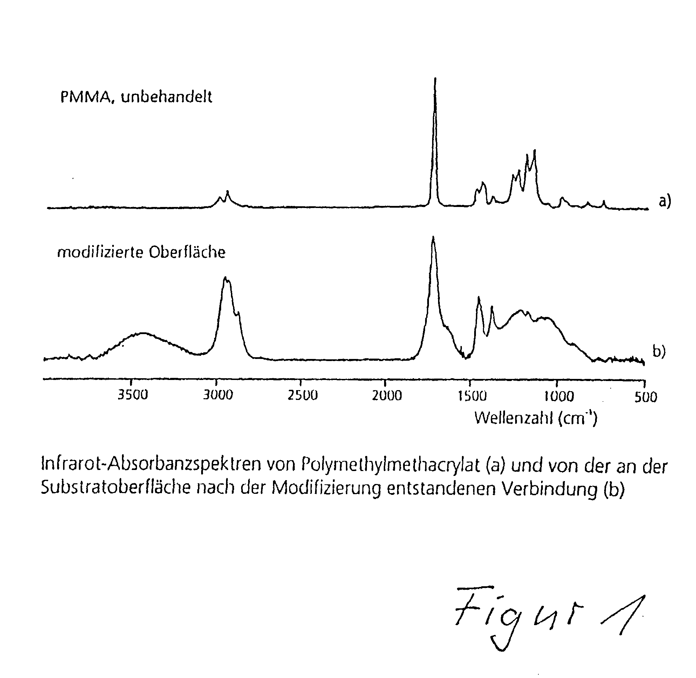

Nach Ablauf von ca. 360 s hat sich eine mindestens 100 nm dicke homogene Oberflächenschicht gebildet, wobei das diese Schicht bildende neue Polymermaterial einen hohen Anteil von Methylen- und Hydroxylgruppen aufweist. Die üblicherweise für Polymethylmethacrylat charakteristischen C-O und C=O-Gruppierungen sind bei der Modifizierung teilweise abgebaut worden. Dabei ändert sich auch die chemische Umgebung der C=O-Gruppierung, so daß es zu einer Bandenverschiebung im Infrarotspektralbereich kommt (vgl. Figur 1).

Das entsprechend dem bisher beschriebenen an der Oberfläche modifizierte Substrat kann nachfolgend mit weiteren Funktionsschichten versehen werden. Hierfür können die verschiedensten Beschichtungsverfahren eingesetzt werden, wobei sich in jedem Fall die verbesserte Haftung der modifizierten Oberfläche des Substrates vorteilhaft auswirkt.

Günstigerweise kann jedoch die weitere Beschichtung in der gleichen Beschichtungsanlage durchgeführt werden, in der auch die Modifizierung erfolgt ist. Dabei wird im Rezipienten ein Hochvakuum erzeugt und ein Verfahren mit Plasma-Ionenstützung zur weiteren Beschichtung verwendet. Im Gegensatz zu den herkömmlicherweise verwendeten Vorbehandlungsverfahren, wirkt sich die bei diesem Verfahren auftretende UV-Strahlung nicht negativ auf die gewünschten Haftungseigenschaften des modifizierten Polymethylmethacrylat aus. Unabhängig von der UV-Strahlung bleibt das verbesserte Haftverhalten weiter erhalten. Dadurch kann der Vorteil der Ionenstützung zur Verdichtung der aufwachsenden Schichten auch bei relativ niedrigen Temperaturen voll ausgenutzt werden, ohne daß Nachteile zu befürchten sind.

Neben reinem Polymethylmethacrylat können auch Substrate mit einem Polymethylmethacrylatanteil erfindungsgemäß oberflächenmodifiziert werden. So konnten Versuche mit dem Copolymer HW 55, das von der Firma Rhöm kommerziel erhältlich ist, erfolgreich durchgeführt werden. Außerdem können auch verschiedene Multipolymere nach der Erfindung modifiziert werden.

Beispiele für durch Additive in ihren Eigenschaften beeinflußte Polymethylmethacrylate, die ebenfalls dem erfindungsgemäßen Verfahren zugänglich sind, sind:
PMMA 7N, PMMA 6N, PMMA 8N, (Fa. Rhöm)
Acrylite® (Cyro Industries Co.) (in verschiedenen Modifikationen)
Plexiglas® DR, Plexiglas® DRG, Plexiglas® HFI-7 und HFI-10
Plexiglas® VO45 ... (Fa. Rhom & Haas)
Modar® 816 ... (von Fa. ICI Acrylis)
Lucite® 4F, Lucite® 30B, Lucite® 47G ... (Du Pont)
CP51, CP61 (Continental Polymers).

Beispiele für Co- und Multipolymere mit überwiegendem Methacrylat-Anteil sind:
Acrythene® (Quantum Chemicals Co.) Ethylen-Methylmethacrylat-Copolymer
Zylar® 93-541 (Polysar) Methylmethacrylat-Butadien-Styren-Terpolymer
XT Polymer 250 (Cyro Industries Co.) Acryl-Multipolymer.

Nachfolgend soll die Erfindung an Ausführungsbeispielen näher erläutert werden.

Polymethylmethacrylat weist als Ausgangsmaterial, sehr gute optische Eigenschaften auf und läßt sich sehr einfach, beispielsweise durch Spritzgießen herstellend und besser als alle anderen bekannten Kunststoffe, insbesondere für präzionsoptische Anwendungen, einsetzen. Dabei können die Funktionalität und die Gebrauchseigenschaften, der in der Optik angewendeten Substrate, durch die Aufbringung von Funktionsschichten wesentlich beeinflußt werden. Hierfür wird bevorzugt ein Aufbau mehrerer dielektrischer Schichten übereinander hergestellt. Dabei sollen für viele Anwendungen Entspiegelungen der Oberflächen im sichtbaren Spektralbereich erreicht werden.

Eine spritzgegossene Linse aus Polymethylmethacrylat soll zur modifizierenden Vorbehandlung und zum nachfolgenden Auftrag einer Beschichtung in eine VakuumBeschichtungsanlage, wie sie von der Leybold AG unter der Typbezeichnung APS 904 erhältlich ist, eingebracht werden. Diese Hochvakuumbeschichtungsanlage hat zusätzlich eine Plasma-Ionenquelle, zwei Elektronenstrahlverdampfer und ein Diffusionspumpensystem.

Dabei wurde in diese Anlage eine zusätzliche Elektrode eingebracht, wie sie bisher auch zum Beglimmen eingesetzt worden ist. Die Anordnung der zusätzlichen Elektrode erfolgt dabei bevorzugt im Bereich der Elektronenstrahlverdampfer in einem Abstand von ca. 60 cm zum Substrathalter im Rezipienten. Die wirksame Elekrodenfläche sollte ca. 300 cm² betragen.

Nachfolgend wird in der Beschichtungsanlage ein Hochvakuum erzeugt. Für die Modifizierung der Substratoberfläche wird befeuchtete Luft, mit mindestens 40 % relativer Luftfeuchtigkeit in den Rezipienten eingeführt. Dabei wird der Druck im Rezipienten zwischen 10⁻² mbar und 5 * 10⁻² mbar gehalten. Zwischen Rezipienten oder Substrathalter und zusätzlicher Elektrode wird eine Hochspannung bis zu 2 kV bei ca. 0,2 A angelegt. Das sich ausbildende Plasma trägt Substratmaterial ab und die Oberflächenschicht wird zu chemischen Reaktionen angeregt. Innerhalb von 5 Minuten bildet sich an der Oberfläche des Polymethylmethacrylat-Substrates eine neue Polymerschicht, die die verbesserten Eigenschaften, insbesondere in bezug auf eine verbesserte Haftung aufweist.

Die Modifizierung kann aber auch bei Drücken zwischen 10⁻² und 5 * 10⁻² mbar, unter Ausbildung eines Plasmas mittels einer Hochspannung von 1,4 kV und einer Stromstärke von 100 mA über einen Zeitraum zwischen 300 und 800 s durchgeführt werden.

Auf jeden Fall sollte die Leistung zwischen 150 und 700 W eingestellt werden, um sehr gute Ergebnisse zu erreichen.

Nachfolgend wird im Rezipienten ein Hochvakuum durch Abpumpen auf einen Druck von ca. 5 * 10⁻⁶ mbar erzeugt.

Auf herkömmliche Weise wird dann ein Wechselschichtsystem, verschiedenster Funktionsschichten (z.B. Ta₂O₅/SiO₂) aufgedampft.

Während des Aufdampfens werden die aufwachsenden Schichten durch Beschuß mit energiereichen Argon-Ionen aus einer Plasma-Ionenquelle, die Bestandteil der Beschichtungsanlage ist, verdichtet.

Die erfindungsgemäß modifizierten und nachfolgend beschichteten Proben erfüllen den Haftfestigkeitstest nach ISO 9211-4-02 (Tapetest) sowie die Klimatests nach ISO 9022-12-07 (feuchte Wärme) und ISO 9022-14-02 (langsamer Temperaturwechsel) ohne jegliche Defektbildung und der erfindungsgemäße Effekt konnte nachgewiesen werden.

Die Oberflächenspannung behandelter PMMA-Proben wurde inzwischen mit Testtinten nach DIN 53364 bestimmt. Die Oberflächenspannung spritzgegossener PMMA-Oberflächen vor der Behandlung beträgt danach 38 mN/m. Nach der Behandlung liegt die Oberflächenspannung oberhalb 56 mN/m, d.h. die Benetzbarkeit wurde verbessert. Eine gute Benetzbarkeit ist z.B. auch Voraussetzung für das Bedrucken und Verkleben von Oberflächen.

Bei einem weiteren Ausführungsbeispiel wurde die Vorbehandlung in einer Vakuumkammer durchgeführt, die vorteilhaft über eine Schleuse mit einer Sputterkammer gekoppelt ist. Die Kammer zur Probenvorbehandlung wurde mit einer Glimmkathode ausgerüstet. Es wurde auf Hochvakuum gepumpt und anschließend Luft mit einem Feuchtegehalt von 50% r.F. eingelassen, so daß der stationäre Druck 4 * 10⁻² mbar erreicht worden ist. Nach Anlegen einer Hochspannung (2 kV, 1 A) bildete sich innerhalb von 5 Minuten die neue Polymerschicht an der Oberfläche der PMMA-Substrate. Die Proben wurden anschließend entweder über eine Schleuse ohne Zwischenbelüftung oder mit Zwischenbelüftung manuell in die Sputteranlage überführt und mit 100 nm Aluminium besputtert (Magnetron-Sputtern, 8 min, 300 W DC). Die Beschichtung ist haftfest nach ISO 9211-4-02 (Tapetest).

Außerdem kann zur Erhöhung der Kratzfestigkeit bei Raumtemperatur mit Plasma-Ionenunterstützung einer Ionenquelle APS eine 1 µm dicke SiO₂-Schicht im Vakuum aufgedampft werden. Im Scanning-Scratch-Test (Meßgerät SST101 Shimadzu) bleibt diese Beschichtung bis zu einer kritischen Kraft K = 150 mN defektfrei (Vergleich nicht modifiziertes PMMA : Schädigung bei K > 50 mN). Eine Schichtablösung wurde auch bis zu einer Kraft von 250 mN nicht beachtet.

Ebenfalls mit Plasma-Ionenunterstützung wurde ohne Heizung der Substrate ein Gemisch aus Indiumoxid und Zinnoxid (ITO) auf die erfindungsgemäß vorbehandelten PMMA-Flächen im Vakuum aufgedampft. Bei einer Schichtdicke von 300 nm ITO auf PMMA wurde ein Flächenwiderstand von 15 Ω bei einer Transmission besser als 90 % im sichtbaren Spektralbereich erreicht. Die Proben erfüllen die Haftfestigkeits- und Klimatests (ISO 9211-4-02, ISO 9022-12-07, ISO 9022-14-02).

## Patentansprüche

1. Verfahren zur Modifizierung von Substrat-Oberflächen aus Polymeren oder Copolymeren mit Methacrylatanteil mit einer Plasmabehandlung im Vakuum,
**dadurch gekennzeichnet,**
**daß** ein reaktives Sauerstoff und Wasser enthaltendes Gas mit einem äquivalenten Anteil Wasser, der einer relativen Feuchtigkeit von mindestens 30 % und maximal 70 % in Luft entspricht, zugeführt und eine Modifizierung, bei einem Druck zwischen 10⁻¹ und 10⁻² mbar, so durchgeführt wird, daß in der Oberflächenschicht des Substrates ein Polymermaterial, mit hohem Anteil Methylen- und Hydroxylgruppen gebildet wird, das sich vom Substratmaterial unterscheidet.

2. Verfahren nach Anspruch 1,
**dadurch gekennzeichnet, daß** reaktives Gas mit einem äquivalenten Anteil Wasser, einer relativen Feuchtigkeit von mindestens 40 % in Luft, zugeführt wird.

3. Verfahren nach Anspruch 1 oder 2,
**dadurch gekennzeichnet, daß** eine Hochspannung zwischen einer zusätzlichen Elektrode, dem Rezipienten oder dem Substrathalter angelegt wird.

4. Verfahren nach mindestens einem der Ansprüche 1 bis 3,
**dadurch gekennzeichnet, daß** die Modifizierung über einen Zeitraum von mindestens 180 s durchgeführt wird.

5. Verfahren nach mindestens einem der Ansprüche 1 bis 4,
**dadurch gekennzeichnet, daß** die Modifizierung in einer mindestens 20 nm dicken Oberflächenschicht des Substrates durchgeführt wird.

6. Verfahren nach mindestens einem der Ansprüche 1 bis 5,
**dadurch gekennzeichnet, daß** nachfolgend an die Modifizierung auf die Oberfläche mindestens eine weitere Schicht aufgetragen wird.

7. Verfahren nach mindestens einem der Ansprüche 1 bis 6,
**dadurch gekennzeichnet, daß** mindestens eine anorganische Schicht mittels eines ionengestützten Plasmabeschichtungsverfahrens aufgebracht wird.

## Claims

1. Process for modifying substrate surfaces made from polymers or copolymers with methacrylate content, by plasma treatment in a vacuum,
**characterized in that**
a reactive oxygen- and water-containing gas with a proportion of water equivalent to a relative humidity of at least 30% and not more than 70% in air is supplied and modification is carried out at a pressure of from 10⁻¹ to 10⁻² mbar in such a way as to form, in the surface layer of the substrate, a polymeric material which has a high proportion of methylene groups and hydroxyl groups and differs from the substrate material.

2. Process according to Claim 1,
**characterized in that** a reactive gas with a proportion of water equivalent to a relative humidity of at least 40% in air is supplied.

3. Process according to Claim 1 or 2,
**characterized in that** a high voltage is applied between an additional electrode and the receiver or the substrate holder.

4. Process according to at least one of Claims 1 to 3,
**characterized in that** the modification is carried out over a period of at least 180 s.

5. Process according to at least one of Claims 1 to 4,
**characterized in that** the modification is carried out in a substrate surface layer whose thickness is at least 20 nm.

6. Process according to at least one of Claims 1 to 5,
**characterized in that** at least one other layer is applied to the surface after modification.

7. Process according to at least one of Claims 1 to 6,
**characterized in that** at least one inorganic layer is applied by means of an ion-assisted plasma-coating process.

## Revendications

1. Procédé pour modifier des surfaces de substrat polymériques ou copolymériques comportant une fraction méthacrylate au moyen d'un traitement au plasma sous vide,
**caractérisé en ce qu'**est amené un gaz réactif contenant de l'oxygène et de l'eau avec une fraction équivalente d'eau, qui correspond à une humidité relative au moins égale à 30 % et au plus égale à 70 % dans l'air, et **en ce qu'**une modification est réalisée, à une pression comprise entre 10⁻¹ et 10⁻² mbar, de façon telle qu'est formé dans la couche superficielle du substrat un matériau polymère présentant une fraction élevée de groupes méthylène et hydroxyle et qui se distingue du matériau du substrat.

2. Procédé selon la revendication 1,
**caractérisé en ce que** l'on amène du gaz réactif avec une fraction équivalente d'eau et une humidité relative au moins égale à 40 % dans l'air.

3. Procédé selon la revendication 1 ou 2, **caractérisé en ce que** l'on applique une haute tension entre une électrode supplémentaire, le récipient ou le support du substrat.

4. Procédé selon au moins l'une des revendications 1 à 3, **caractérisé en ce que** la modification est réalisée sur un intervalle de temps au moins égal à 180 s.

5. Procédé selon au moins l'une des revendications 1 à 4, **caractérisé en ce que** la modification est réalisée dans une couche de surface du substrat présentant une épaisseur au moins égale à 20 nm.

6. Procédé selon au moins l'une des revendications 1 à 5, **caractérisé en ce qu'**au moins une autre couche est appliquée sur la surface suite à la modification.

7. Procédé selon au moins l'une des revendications 1 à 6, **caractérisé en ce qu'**au moins une couche inorganique est appliquée au moyen d'un procédé de revêtement au plasma assisté par ions.
